# EUROPEAN PATENT SPECIFICATION

(11) **EP 1 882 532 B1**
(45) Date of publication and mention of the grant of the patent: **31.10.2018**
(21) Application number: 07252699.9
(22) Date of filing: 05.07.2007
(51) Int. Cl.: B08B 9/46, G01N 1/00, G01N 21/954, G01N 1/10

(54) **Modular system for internal inspection of storage tanks containing liquid fuels**
Modulares System zur internen Prüfung von mit flüssigen Brennstoffen gefüllten Speichertanks
Système modulaire pour inspection interne de cuves de stockage contenant des carburants liquides

(30) Priority: 28.07.2006 BR PI0603020
(43) Date of publication of application: 30.01.2008
(73) Proprietor: Petróleo Brasileiro S.A. Petrobras, Rio de Janeiro, RJ (BR)
(72) Inventor: Machado, Alander Ornellas, Icarai Niteroi, RJ 24.230-191 (BR); Rocha, Mauro Iurk, Icarai Niteroi, RJ 24.220-041 (BR); Pinto, Ricardo Rodriques da Cunha, Botafogo Rio de Janeiro, RJ. 22.270-050 (BR); dos Reis, Ney Robinson Salvi, Catete Rio de Janeiro, RJ 22.221-200 (BR); Meggiolaro, Marco Antonio, Leblon Rio de Janerio, RJ, 22.450-200 (BR); Scofano, Felipe dos Santos, Leblon Rio de Janeiro, RJ, 22.431-050 (BR)
(74) Representative: J A Kemp

(56) References cited:
- EP-A2- 1 491 463
- DE-A1- 4 108 023
- US-A- 5 392 798
- US-A- 5 604 532
- US-A1- 2004 193 016
- US-A1- 2005 045 751

## Description

The invention relates generally to inspection systems. In particular, the invention relates to a system to perform an internal inspection of storage tanks containing liquid fuels. The function of said system is to inspect the inside of the tank by capturing images in real time and to collect selected samples of the stored material and other foreign materials to be analyzed. Said functions are remotely controlled by an operator located nearby and outside of the tank to be inspected.

Storage of liquid fuel in tanks occurs at various stages in the logistical chain of production, distribution, and marketing. Said products are stored in tanks installed in refineries, in terminals, in distribution bases, in large consumer warehouses, and in service and gas stations.

In each of these locations a different type of tank geometry and storage period may be used. During this storage period, the product may become contaminated with other types of products or water itself coming from humidity in the air inside the tank, from rainwater entering the tank, from improper handling, from accidental contamination, or from the production process itself.

In an effort to preserve the characteristics of the stored products, to avoid damage and possible contamination to the environment, it is advisable to adopt a cleaning and inspection routine of the tanks where these liquid products are stored. Usually, inspections are very arduous, since they involve emptying the tank completely before the service can be performed, which can result in high direct and indirect costs. In addition to the characteristics of the product, the inspection of the internal parts of the storage tanks allows verification of its walls regarding the appearance of possible points of corrosion and/or deterioration of the inner lining, when applicable.

Currently, it is not possible to precisely know when certain tanks need to be submitted to a cleaning procedure without emptying it. This lack of precision may cause a loss of time and money, since, with this method, many storage tanks are subject to being emptied in order to inspect the inner parts, at a time that may be too soon, even if it is in good condition, which causes unnecessary costs, or too late, which compromises the quality of the stored fuel and the integrity of the tank itself.

The determination of the precise moment in which it is necessary to perform a cleaning of the storage tank allows a significant reduction in the cost of operation in a storage system, which avoids the expense of unnecessary down time and also allows for identifying the presence of contamination in the storage tanks, which may cause product and tank degradation. This problem can be addressed by using an inspection system that captures images in real time from the inside of the tank, as well as collecting samples to be analyzed for any foreign materials that might be inside the tank. Such a system will usefully permit precise positioning of the inspection devices and collecting samples inside the storage tanks. It is also desirably flexible enough for movement inside the entire tank, independent from the volume of the stored product inside of the storage tank, and is capable of being remotely operated.

At this moment, no system capable of permitting an inspection from any position within the storage tank and simultaneously collecting samples of the stored contents is known. Currently it is only possible to collect samples of liquid fuel and foreign materials by draining and sampling. No system is capable of acting on the entire content in the tanks, or is adapted to detect localized problems.

European patent EP 1,156,304 A1 describes a visual inspection system for tanks which includes a viewing unit, a lighting device, a device to capture images and a remote viewing device. The viewing unit is found on the end of one of the inspection system arms. Inside said viewing unit are introduced: a lighting device and an image capturing device. The image capturing device is connected to the remote viewing device by the operator, who controls the inspection of the tank.

The system described by EP 1,156,304 A1 presents two great disadvantages. The first relates to the fact that the viewing device needs to be rigid and immovable, which limits its use in large sized or irregular shaped tanks, since areas that are distant from the observation device are hard to see. The other disadvantage relates to the fact that there is no system for sample collection, which is fundamental for determining the proper time to perform maintenance on the storage tanks.

US 2005/0045751 discloses an elongated, tubular, compact high pressure sprayer apparatus for insertion into an access port of vessels having contaminated interior areas that require cleaning by high pressure water spray. The invention includes a spray nozzle and a camera adjacent thereto with means for rotating and raising and lowering the nozzle so that areas identified through the camera may be cleaned with a minimum production of waste water to be removed. The piping and connectors are preferably made of stainless steel.

The present invention attempts to allow visual inspection and sample collection through use of a flexible pneumatic device, adapted and graded to perform inspections in liquid fuel storage tanks. This system, the base of which is installed through an opening in the top of the tank, usually known as "view aperture" or "inspection aperture", makes the inspection of all the walls and all the internal volume possible, for any condition of measuring the liquid in the tank. The invention allows the positioning of a device to view the appearance of the inside of the tank in any area, and to collect samples of the stored liquid fuel and other foreign material, even at locations remote from the view aperture.

According to one aspect, the invention provides an internal inspection device for liquid fuel storage tanks according to claim 1.

The compressed fluid is preferably arranged to bend the terminal module by acting on its one or more pneumatic chambers. The terminal module may comprise a central tube, a collecting tube and an intermediary connection.

The terminal module is preferably generally tubular and the image capturing device and optional sample collecting device are preferably located facing outwardly at one end of the tubular terminal module.

The intermediary connection member can be arranged to connect to either one surface of a liquid fuel storage tank or to an extension module. This allows a modular system to be provided which can be adapted according to tank size etc.

One or more extension modules may be provided that allow compressed fluid to be provided to the one or more pneumatic chambers of the terminal module when connected thereto.

The one or more extension modules may themselves comprise one or more pneumatic chambers that can be utilized to bend the extension module by the action of compressed fluid.

There are preferably three pneumatic chambers in the terminal module and each extension module. Preferably, they are equidistantly spaced around a central longitudinal axis.

The terminal module is preferably provided with a sample collecting device for collecting one or more samples.

A disclosed arrangement provides a modular internal inspection system for liquid fuel storage tanks, said system comprising a terminal module comprising an image capturing device for capturing images of the inside of a liquid fuel storage tank, and one or more extension modules arranged to be connected between said terminal module and the inside of said liquid fuel storage tank.

This arrangement presents a system for the internal inspection of storage tanks, controlled and monitored remotely, which permits simultaneous viewing and capturing images in real time and can be used to collect samples at any area inside the tank during the inspection. Such a system preferably includes a pneumatic module, an interface module, a control module, and an operation module. The system presented in this document has the following principal advantages: allows viewing and collecting samples in any area inside the tank, possesses a modular construction, and it is an intrinsically secure system. Because it is a modular system it may be used in any type of tank normally found in industrial installations, and because it is an intrinsically secure system and is constructed of a material that is resistant to the stored product and is spark-proof, it may be used in tanks that are used to store the most diverse types of liquid fuels and other flammable liquids, with no risk of explosion.

This arrangement relates to a modular system for inspecting the interior of liquid fuel storage tanks, used to inspect visually the inside of the tank and to collect samples to analyze the stored products.

One arrangement provides a modular internal inspection system for liquid fuel storage tanks, capable of allowing visual inspection of any internal area, as well as collecting samples of the stored product, comprising an assembly constituted by the following components:-
an operation module (6) which allows the operator to control a pneumatic controller (2), to control the operation of sample collection, to view the inside of the tank, and to record the data that is transferred by the internal tank inspection system (1);
a control module (5) that receives the information from the operation module (6), processes the information and sends an actuator signal to the interface module (4);
an interface module (4) which receives the actuator signal, processed by the control module (5), and converts it into the proper pattern of actuation the pneumatic module (3);
a pneumatic module (3), which regulates the pressure and the gas output received from a gas supply source (10), into the inside of the pneumatic controller (2);
a number of connecting cables (7a, 7b, 7c);
a pneumatic controller (2), which consists of:
   a) a terminal module (2A) which includes a clad tube of the terminal module (20), a number of pneumatic chambers of the terminal module (21), a central tube of the terminal module (25), a collection tube of the terminal module (26), an intermediary connection of the terminal module (27) and a terminal connection (22), which houses an image capturing device (23), and a sample colleting device (24);
   b) a number of extension modules (2B) which include each one a clad tube of the extension module (30), a number of pneumatic chambers of the extension module (31), a central tube of the extension module (35), a collecting tube of the extension module (36), and two intermediary connections of the extension module (37a, 37b).

The interface module (4), the control module (5), and the operation module (6) may form one single component which are interlinked to the pneumatic module (3) by connecting cables (7a, 7b,7c).

Alternatively, the interface module (4), the control module (5), and the operation module (6) may form one single component being that single component interlinked to the pneumatic module (3) by a connecting cable (7c).

The pneumatic module (3), the interface module (4), the control module (5), and the operation module (6) may form one single component.

The terminal module clad tube (20), and the extension module clad tube (30), are preferably flexible enough to allow the pneumatic controller (2) to bend and are preferably made from appropriate polymeric materials in order to function properly when in use and be resistant to the stored product.

The pneumatic controller (2) may include only one terminal module (2A).

Alternatively, the pneumatic controller (2) may include only one terminal module (2A) and a number of extension modules (2B).

The modular internal inspection system may be remotely operated and allow recording of images and data collected during the inspection.

The interaction between the operator and the inspection system can occur through a dedicated computer system that translates the movement orders transmitted by the operator to be executed by the inspection system.

The invention shall now be explained in greater detail, by way of non-limitative example only, with reference to the accompanying drawings, in which:-
FIGURE 1 shows a diagram of the preferred implementation of the internal tank inspection system;
FIGURES 2 shows a front view, a side view, and a cross section of the terminal module of this invention; and
FIGURES 3 shows a front view, a side view, and a cross section of the extension module of this invention.

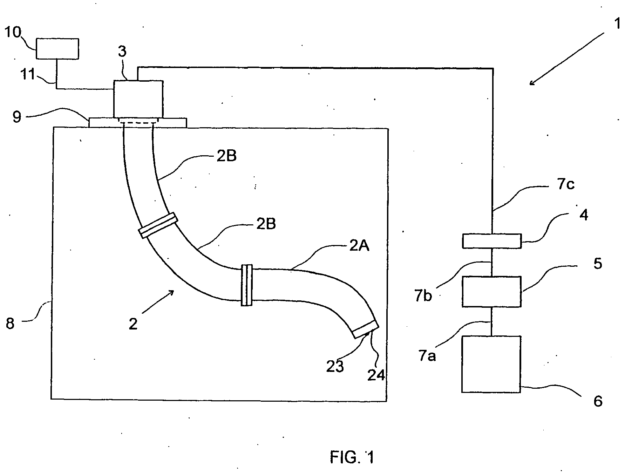

FIGURE 1 shows a preferred implementation of the internal inspection system for storage tanks 1, which includes a pneumatic controller 2, a pneumatic module 3, an interface module 4, a control module 5, an operation module 6, and several connection cables 7. The operation module 6 allows the operator to control the positioning of the pneumatic controller 2, to control the operation of sample collection, to view the inside of the tank 8, and to record the data that is transferred by the internal storage tank inspection system 1. The interaction between the operator and the inspection system preferably occurs through a dedicated computer program that translates the movement commands emitted by the operator to be executed by the inspection system. There is a mathematical model added to this computer program supported by a number of specific equations to that end. Said operation module 6 is interlinked to the control module 5 by a connecting cable 7a. The control module 5 receives the information from the operation module 6, processes these and sends an actuator signal to the interface module 4. The interface module 4 receives the actuator signal, processed by the control module 5, through a connecting cable 7b, and it converts it into the proper pattern of activation for the pneumatic module 3. Said signal, processed by the interface module 4 is sent through the connecting cable 7c to the pneumatic module 3. The pneumatic module 3, which receives fluid in the form of gas from a gas supply source 10, through a supply line 11, which regulates pressure and the gas output into the inside of the pneumatic controller 2. The pneumatic controller 2 allows the positioning of an image capturing device 23 and one or more sample collecting devices 24 inside the tank 8.

The pneumatic controller 2 includes a terminal module 2A and, in this embodiment, a number of extension modules 2B. The number of extension modules 2B varies with the size and geometry of the tank 8 to be inspected, and a dedicated computer program is used to allow the movements of the system be properly coordinated. Therefore, the number of extension modules 2B, presented in FIGURE 1, that shows the preferred implementation for the internal storage tank inspection system 1, should not be considered as a limitation for this invention. It should be noted that the tank 8, its view aperture 9, the gas supply source 10 and the supply line 11 are not part of the invention and they are shown in FIGURE 1 in order to permit a better understanding of how it operates. It should even be noted that the internal tank inspection system 1 should have an electrical supply from an external source, not shown in FIGURE 1, in order to run.

The connecting cables 7a, 7b and 7c have a function of allowing the transmission of analogue or digital signals between the pneumatic module 3, the interface module 4, the control module 5, and the operation module 6.

In this way, modules 4, 5, 6 may form one single integral component, for example, a computer with proper output plates linked by a cable to the module 3.

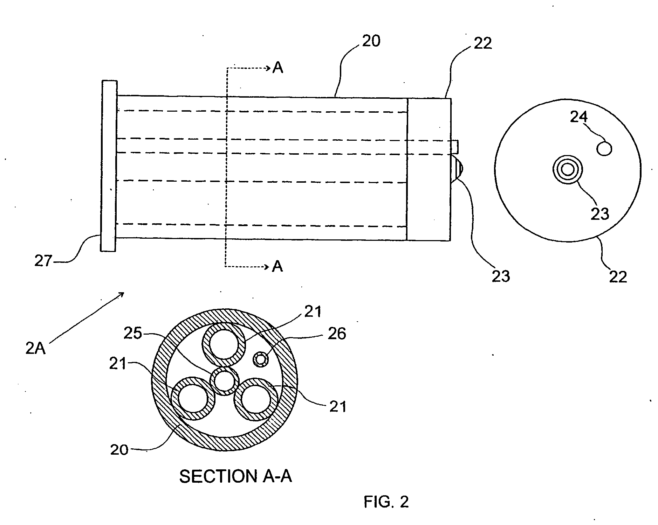

As can be seen in FIGURE 2, the terminal module 2A of the pneumatic controller 2 includes a clad tube 20 of the terminal module, a number of pneumatic chambers 21 of terminal module, a central tube 25 of terminal module, a collecting tube 26 of the terminal module, an intermediary connection 27 of the terminal module and a terminal connection 22. Said terminal connection 22 houses an image capturing device 23 and a sample collecting device 24. These devices are arranged to face outwardly from one end of the terminal module.

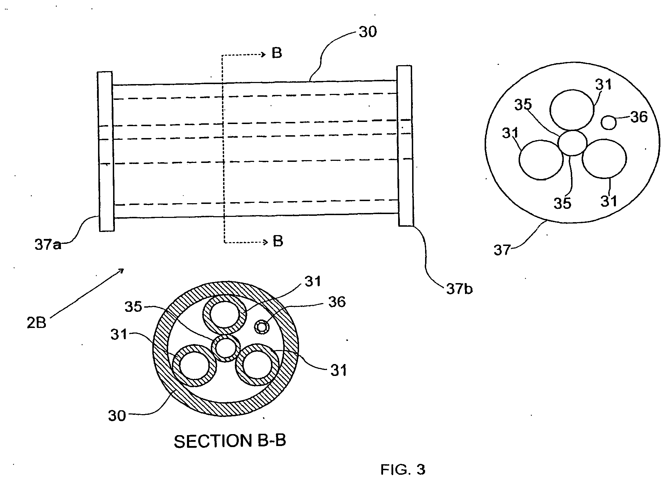

As can be seen in FIGURE 3, the components of the extension module 2B of the pneumatic controller 2 are similar to the terminal module 2A. Thus, the extension module 2B includes a clad tube 30 of the extension module, a number of pneumatic chambers 31 of the extension module, a central tube 35 of the extension module, a collecting tube 36 of the extension module, and two intermediary connections 37a, 37b to join extension module segments 2B together.

As mentioned above, the pneumatic controller 2 includes a number of extension modules 2B and a terminal module 2A connected to each other. The configuration of the pneumatic controller 2 should be defined as a function of the geometry of the tank 8 to be inspected. If the tank is small, the pneumatic controller 2 may be only the terminal module 2A itself.

Once connected, the extension modules 2B and the terminal module 2A become one single component, or in other words, the pneumatic controller 2. The pneumatic controller 2 will receive gas in each of pneumatic chambers of terminal module 21 and pneumatic chambers of extension module 31, individually, which will allow a variation of its form and its position within the tank 8. The calculation of the pressure that must be maintained inside each pneumatic chamber of terminal module 21 and each pneumatic chamber of extension module 31, for the definition of the position of the pneumatic controller 2, is made by the control module 5, through a specific computer program for this function. It should be mentioned that the clad tube of terminal module 20 and the clad tube of extension module 30 is flexible enough to allow the pneumatic controller 2 be deformed. The central tube of the terminal module 25 and the central tube of the extension module 35 give a minimum rigidity to the structure of the pneumatic controller 2.

Due to its construction and the materials used, the modular internal tank inspection system 1 of the invention is an intrinsically secure system, since the pneumatic controller 2, which enters into contact with the product stored in the tank 8, does not release any electrical energy and does not produce sparks, that might be caused by friction against the tank walls 8. In this way, the modular internal tank inspection system 1 can be used on tanks that store the most different types of liquid fuels, with no risk of explosion.

The elements that integrate the modular internal tank inspection system 1 in themselves use materials, components, and fixtures known in the state of the art. Therefore, the components of the modular internal tank inspection system 1 may be fastened to each other using bolts, rivets, glue, soldering, or any other method of fastening known in the state of the art. The components of the pneumatic controller 2 may be constructed of an appropriate polymer material, such as polyurethane, commercial products such as *viton* (fluorinated polyethylene) and *Teflon* (fluorinated polypropylene), metal alloys or any material, with the mechanical characteristics and physico-chemical properties necessary for carrying out their functions. It should be also highlighted that, for the manufacture and assembly of the pneumatic module 3, of the interface module 4, of the control module 5 and of the operation module 6, components used are known in the state of the art, such as valves, connections, printed circuit boards, microprocessors, converter boards, video monitors, keyboards, and power sources. However, the assembly now proposed constitutes a new arrangement.

The invention was described here emphasizing its preferred realization, but it is to be understood that it is not to be limited to the disclosed embodiment. Thus, the present invention is intended to be within the scope of the following claims, which define the invention.

## Claims

1. An internal inspection device for liquid fuel storage tanks, said device comprising:
a terminal module (2A) comprising an image capturing device (23) for capturing images of the inside of a liquid fuel storage tank, said terminal module comprising one or more pneumatic chambers (21) for the selective admission of compressed fluid thereto, such that the position and/or orientation of said image capturing device may be modified by said selective admission of compressed fluid to said one or more pneumatic chambers, and wherein said terminal module further comprises a flexible outer cladding (20), made from polymeric materials, encompassing said one or more pneumatic chambers.

2. An internal inspection device according to claim 1, wherein said terminal module is arranged to be bent by the action of said compressed fluid in said one or more pneumatic chambers.

3. An internal inspection device according to any one of the preceding claims, wherein said terminal module is generally tubular and said image capturing device is located facing outwardly at one end of said tubular terminal module.

4. An internal inspection device according to any one of the preceding claims, wherein said terminal module comprises a connection member (27) for connecting with the side of a liquid fuel storage tank or an extension module.

5. An internal inspection device according to any one of the preceding claims, further comprising an extension module (2B) that is arranged to allow compressed fluid to be provided to said one or more pneumatic chambers of said terminal module when connected thereto.

6. An internal inspection device according to claim 5, wherein said extension module comprises one or more pneumatic chambers (31) such that said extension module may be bent by the action of said compressed fluid in said one or more pneumatic chambers.

7. An internal inspection device according to claim 5 or 6, wherein said extension module comprises a connection member (37a, 37b) for connection with the side of a liquid fuel storage tank or another extension module.

8. An internal inspection device according to any one of the preceding claims, wherein there are three pneumatic chambers spaced around a central longitudinal axis.

9. An internal inspection device according to any one of the preceding claims, wherein said module(s) comprise(s) a central tube (25, 35) with said one or more pneumatic chambers surrounding said central tube.

10. An internal inspection device according to any one of the preceding claims, wherein said terminal module further comprises a sample collecting device (24) for collecting a sample.

11. An internal inspection device according to claim 10, wherein said sample collecting device is located facing outwardly at one end of said terminal module.

12. An internal inspection device according to any one of the preceding claims, further comprising:
an operation module (6) for allowing control of at least said terminal module, and to record the data that is transferred;
a control module (5) arranged to receive information from said operation module, process the information and supply to it an actuation signal and convert it into a pattern of pneumatic signals;
a pneumatic module (3) arranged to regulate pressure and gas output from a gas supply source to at least said terminal module.

13. An internal inspection device according to claim 12, wherein said interface module, control module and operation module form one single component.

14. An internal inspection device according to claim 12, wherein said pneumatic module, interface module, control module and operation module form one single component.

## Patentansprüche

1. Interne Prüfvorrichtung für Flüssigbrennstoffspeichertanks, wobei die Vorrichtung Folgendes umfasst:
ein Terminalmodul (2A), umfassend eine Bilderfassungsvorrichtung (23) zum Erfassen von Bildern des Innern eines Flüssigbrennstoffspeichertanks, wobei das Terminalmodul eine oder mehrere pneumatische Kammern (21) zur selektiven Aufnahme von verdichteter Flüssigkeit darin umfasst, sodass die Position und/oder Orientierung der Bilderfassungsvorrichtung durch die selektive Aufnahme von verdichteter Flüssigkeit in der einen oder den mehreren pneumatischen Kammern modifiziert werden kann, und wobei das Terminalmodul ferner einen biegsamen Außenmantel (20) aus Polymermaterialien umfasst, der die eine oder die mehreren pneumatischen Kammern umschließt.

2. Interne Prüfvorrichtung nach Anspruch 1, wobei das Terminalmodul angeordnet ist, um durch die Aktion der verdichteten Flüssigkeit in der einen oder den mehreren pneumatischen Kammern gebogen zu werden.

3. Interne Prüfvorrichtung nach einem der vorstehenden Ansprüche, wobei das Terminalmodul im Allgemeinen röhrenförmig ist und die Bilderfassungsvorrichtung sich nach außen gerichtet an einem Ende des röhrenförmigen Terminalmoduls befindet.

4. Interne Prüfvorrichtung nach einem der vorstehenden Ansprüche, wobei das Terminalmodul ein Verbindungselement (27) zum Verbinden mit der Seite eines Flüssigbrennstoffspeichertanks oder einem Erweiterungsmodul umfasst.

5. Interne Prüfvorrichtung nach einem der vorstehenden Ansprüche, ferner umfassend ein Erweiterungsmodul (2B), das angeordnet ist, um es der verdichteten Flüssigkeit zu erlauben, der einen oder den mehreren pneumatischen Kammern des Terminalmoduls bereitgestellt zu werden, wenn es damit verbunden ist.

6. Interne Prüfvorrichtung nach Anspruch 5, wobei das Erweiterungsmodulmodul eine oder mehrere pneumatische Kammern (31) umfasst, sodass das Erweiterungsmodul durch die Aktion der verdichteten Flüssigkeit in der einen oder den mehreren pneumatischen Kammern gebogen werden kann.

7. Interne Prüfvorrichtung nach Anspruch 5 oder 6, wobei das Erweiterungsmodul ein Verbindungselement (37a, 37b) zur Verbindung mit der Seite eines Flüssigbrennstoffspeichertanks oder einem anderen Erweiterungsmodul umfasst.

8. Interne Prüfvorrichtung nach einem der vorstehenden Ansprüche, wobei es drei pneumatische Kammern gibt, die um eine Mittellängsachse beabstandet sind.

9. Interne Prüfvorrichtung nach einem der vorstehenden Ansprüche, wobei das/die Modul(e) ein Mittelrohr (25, 35) mit der einen oder den mehreren pneumatischen Kammern, die das Mittelrohr umgeben, umfasst/umfassen.

10. Interne Prüfvorrichtung nach einem der vorstehenden Ansprüche, wobei das Terminalmodul ferner eine Probenentnahmevorrichtung (24) zum Entnehmen einer Probe umfasst.

11. Interne Prüfvorrichtung nach Anspruch 10, wobei die Probenentnahmevorrichtung sich nach außen gerichtet an einem Ende des Terminalmoduls befindet.

12. Interne Prüfvorrichtung nach einem der vorstehenden Ansprüche, ferner umfassend:
ein Betriebsmodul (6) zum Erlauben einer Steuerung von mindestens dem Terminalmodul und um die Daten aufzuzeichnen, die übermittelt werden;
ein Steuermodul (5), das angeordnet ist, Informationen von dem Betriebsmodul zu empfangen, die Informationen zu verarbeiten und ein Betätigungssignal damit zu versorgen und es in ein Muster von pneumatischen Signalen umzuwandeln;
ein pneumatisches Modul (3), das angeordnet ist, einen Druck und eine Gasausgabe von einer Gasversorgungsquelle mindestens zu dem Terminalmodul zu regulieren.

13. Interne Prüfvorrichtung nach Anspruch 12, wobei das Schnittstellenmodul, Steuermodul und Betriebsmodul eine einzige Komponente bilden.

14. Interne Prüfvorrichtung nach Anspruch 12, wobei das pneumatische Modul, Schnittstellenmodul, Steuermodul und Betriebsmodul eine einzige Komponente bilden.

## Revendications

1. Dispositif d'inspection interne pour des réservoirs de stockage de combustible liquide, ledit dispositif comprenant :
un module de terminal (2A) comprenant un dispositif de capture d'image (23) destiné à capturer des images de l'intérieur d'un réservoir de stockage de combustible liquide, ledit module de terminal comprenant au moins une chambre pneumatique (21) pour l'admission sélective de fluide comprimé dans celle-ci, de sorte que la position et/ou l'orientation dudit dispositif de capture d'image puissent être modifiées par ladite admission sélective de fluide comprimé dans ladite au moins une chambre pneumatique, et ledit module de terminal comprenant en outre un plaquage externe souple (20), constitué de matériaux polymères, englobant ladite au moins une chambre pneumatique.

2. Dispositif d'inspection interne selon la revendication 1, dans lequel ledit module de terminal est agencé pour être fléchi par l'action dudit fluide comprimé dans ladite au moins une chambre pneumatique.

3. Dispositif d'inspection interne selon l'une quelconque des revendications précédentes, dans lequel ledit module de terminal est généralement tubulaire et ledit dispositif de capture d'image est situé tourné vers l'extérieur à une extrémité dudit module de terminal tubulaire.

4. Dispositif d'inspection interne selon l'une quelconque des revendications précédentes, dans lequel ledit module de terminal comprend un élément de raccordement (27) destiné à effectuer un raccordement avec le côté d'un réservoir de stockage de combustible liquide ou un module d'extension.

5. Dispositif d'inspection interne selon l'une quelconque des revendications précédentes, comprenant en outre un module d'extension (2B) qui est agencé pour permettre la fourniture du fluide comprimé à ladite au moins une chambre pneumatique dudit module de terminal lorsqu'il est raccordé à celle-ci.

6. Dispositif d'inspection interne selon la revendication 5, dans lequel ledit module d'extension comprend au moins une chambre pneumatique (31) de sorte que ledit module d'extension puisse être fléchi par l'action dudit fluide comprimé dans ladite au moins une chambre pneumatique.

7. Dispositif d'inspection interne selon la revendication 5 ou 6, dans lequel ledit module d'extension comprend un élément de raccordement (37a, 37b) pour un raccordement avec le côté d'un réservoir de stockage de combustible liquide ou un autre module d'extension.

8. Dispositif d'inspection interne selon l'une quelconque des revendications précédentes, dans lequel trois chambres pneumatiques sont espacées autour d'un axe longitudinal central.

9. Dispositif d'inspection interne selon l'une quelconque des revendications précédentes, dans lequel l'au moins module comprend un tube central (25, 35), ladite au moins une chambre pneumatique entourant ledit tube central.

10. Dispositif d'inspection interne selon l'une quelconque des revendications précédentes, dans lequel ledit module de terminal comprend un dispositif de collecte d'échantillon (24) destiné à collecter un échantillon.

11. Dispositif d'inspection interne selon la revendication 10, dans lequel ledit dispositif de collecte d'échantillon est situé tourné vers l'extérieur à une extrémité dudit module de terminal.

12. Dispositif d'inspection interne selon l'une quelconque des revendications précédentes, comprenant en outre :
un module de fonctionnement (6) destiné à permettre la commande au moins dudit module de terminal et à enregistrer les données qui sont transférées ;
un module de commande (5) agencé pour recevoir des informations dudit module de fonctionnement, traiter les informations et lui fournir un signal d'actionnement et le convertir en une configuration de signaux pneumatiques ;
un module pneumatique (3) agencé pour réguler la pression et la sortie de gaz d'une source d'apport de gaz au moins audit module de terminal.

13. Dispositif d'inspection interne selon la revendication 12, dans lequel lesdits module d'interface, module de commande et module de fonctionnement forment un composant unique.

14. Dispositif d'inspection interne selon la revendication 12, dans lequel lesdits module pneumatique, module d'interface, module de commande et module de fonctionnement forment un composant unique.
